# EUROPEAN PATENT APPLICATION

(11) **EP 0 771 726 A2**
(43) Date of publication of application: **07.05.1997**
(21) Application number: 96307863.9
(22) Date of filing: 30.10.1996
(51) Int. Cl.: B64C 1/20

(54) **Electric pallet lock with load cell**

(30) Priority: 31.10.1995 US 8174; 23.10.1996 US 735725
(71) Applicant: AAR CORPORATION, Elk Grove Village, Illinois 60007 (US)
(72) Inventor: Cailey, Ronald J., Traverse City Michigan (US); Palmer, Alden H., Central Lake Michigan (US)
(74) Representative: Morton, Colin David

(57) **Abstract**

A pallet lock (40) selectively restrains movement of a cargo pallet (44) within an aircraft. The pallet lock includes a housing (50) and a pawl (66) pivotally attached to the housing. The pawl (66) is adapted to pivot between a first position wherein the pawl is adapted to engage the cargo pallet (44) and restrain movement of the cargo pallet and a second position wherein the pawl is adapted to allow unrestrained movement of the cargo pallet. A locking arm (110) is pivotally attached to the housing (50) and is selectively pivotal between a locked position wherein the locking arm is adapted to engage the pawl to prevent the pawl (66) from pivoting from the first position to the second position and an unlocked position. An actuator mechanism (130) is adapted to selectively pivot the locking arm (110) to the unlocked position and the pawl to the second position when it is desired to release the cargo pallet. A load cell (94) is positioned between the pawl (66) and the locking arm (110) to measure the magnitude of the force the cargo pallet (44) is applying to the pawl when the pawl is in the first position and the locking arm is in the locked position. The actuator mechanism (130) pivots the locking arm (110) to the unlocked position and the pawl (66) to the second position when the load cell (94) detects that the predetermined magnitude of force is being applied to the pawl (66) by the cargo pallet to thereby release the cargo pallet for a parachute drop.

## Description

### Background of the Invention

The present invention is directed to an electric pallet lock for use in cargo transport aircraft to selectively lock a cargo pallet in position and to prevent movement of the cargo pallet in both the fore and aft directions during transport of the loaded pallet, and in particular to an electric pallet lock having a load cell which accurately monitors and transmits the magnitude of the force exerted by the cargo pallet on the pallet lock.

Cargo which is to be transported by aircraft is generally loaded into containers or onto pallets or air drop platforms, hereinafter collectively referred to as "pallets." When the pallets are in their final loaded position within the aircraft, it is required that the pallets be provided with longitudinal restraint in both the fore and aft directions of the aircraft to prevent inadvertent movement of the pallets and cargo.

### Summary of the Invention

The pallet lock of the present invention is adapted for use in various types of cargo transport aircraft or with other types of cargo transport vehicles. The pallet lock performs two primary functions. First, the lock serves to lock and unlock standard eighty-eight inch wide by one-hundred and eight inch long military air cargo pallets in position within an aircraft. The lock is selectively movable between a retracted or unlocked position and an extended or locked position. When one or more locks are placed in the unlocked position, pallets loaded with cargo can be rolled into position over the cargo floor of the aircraft. When the locks are in the locked position, the cargo pallets are restrained by the locks in both the fore and aft directions for air transport of the loaded pallets. Second, the lock may be used in connection with the parachute air drop of cargo. One or more pairs of locks which are restraining an air drop cargo pallet accurately monitor the force exerted on the locks by one or more deployed parachutes which are connected to the cargo and/or pallet. When the force applied to the air drop pallet by the parachute increases to a predetermined value, the locks which are restraining the air drop pallet are moved to the unlocked position to release the air drop pallet and the associated cargo. The air drop pallet and the associated cargo is then pulled out of the aircraft by the parachute and parachutes to earth.

As an example, twelve pairs of left and right pallet locks may be used in a Lockheed C-130 transport aircraft. Six pairs with load cells and six pairs without load cells are typically used. The locks are mounted on the side pallet restraint rails on a forty inch spacing. The locks can be locked or unlocked in opposing pairs from a forward control panel having lock and unlock actuator switches. During parachute air drops, from one to six pairs of locks can be used in tandem, and pre-programmed for the total parachute force to be achieved. The total parachute force can be up to about 25,000 pounds. When the pre-programmed force is reached, control circuitry automatically directs respective electric actuators to simultaneously move the locks from the locked position to the unlocked position, thereby releasing the air drop cargo pallet. Several local control panels may also be employed and located for convenient access throughout the aircraft. Each local control panel may control several pairs of locks. Each local control panel contains lock and unlock actuator switches.

The lock includes a pawl which rotates on a pivot pin between a locked position wherein the pawl engages the cargo pallet and restrains longitudinal movement of the pallet and a retracted position wherein the lock is located behind the surface of the side restraint rail. The pawl includes a pawl roller which reduces friction between the cargo pallet and the pawl when the pawl engages or disengages the pallet. The lock also includes an electric actuator having a ram which is selectively movable between an extended position and a retracted position. The electric actuator selectively pivots a locking arm between a retracted position and an extended position. When the ram of the electric actuator is fully extended, the electric actuator compresses a spring which pivots the locking arm to the extended position which in turn pivots the pawl to the extended position. When the ram of the electric actuator is moved to the retracted position, the electric actuator pivots the locking arm to the retracted position and also pivots the pawl to the retracted position. The pawl includes a strain gage load cell which measures the aft direction of force applied by the pallet to the pawl during parachute air drops and which transmits a signal to a control panel which represents the measured force.

### Brief Description of the Drawings

Figure 1 is a top plan view of the pallet lock of the present invention shown partially broken away in the extended or locked position.

Figure 2 is a top plan view of the pallet lock shown partially broken away in the retracted or unlocked position.

Figure 3 is a cross-sectional view taken along lines 3-3 of Figure 1.

Figure 4 is a cross-sectional view taken along lines 44 of Figure 1.

Figure 5 is a cross-sectional view taken along lines 5-5 of Figure 1.

Figure 6 is a cross-sectional view taken along lines 6-6 of Figure 2.

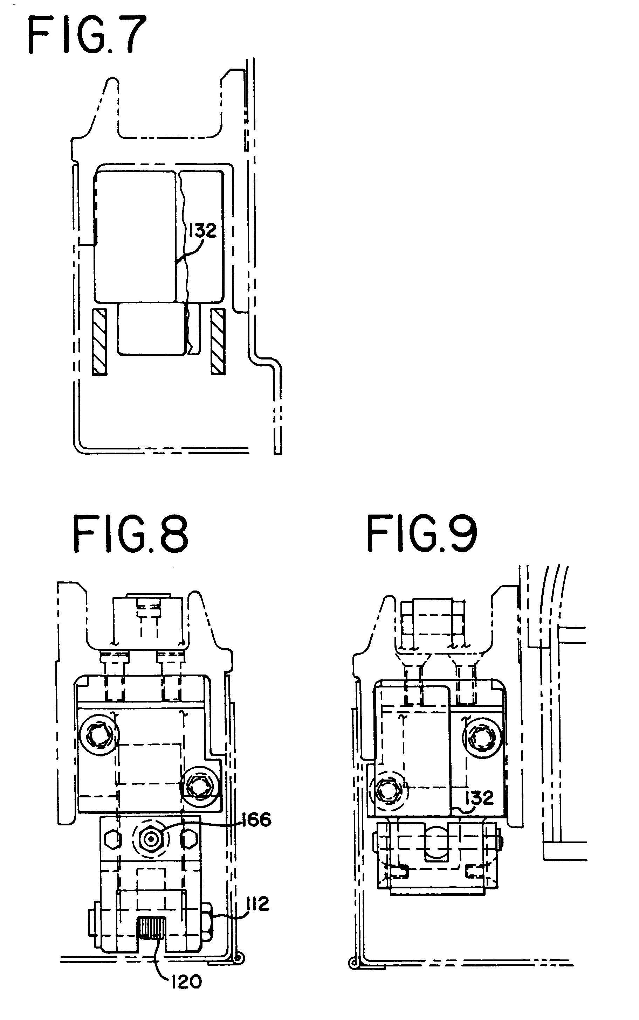

Figure 7 is a cross-sectional view taken along lines 7-7 of Figure 1.

Figure 8 is a left end view of the pallet lock.

Figure 9 is a right end view of the pallet lock

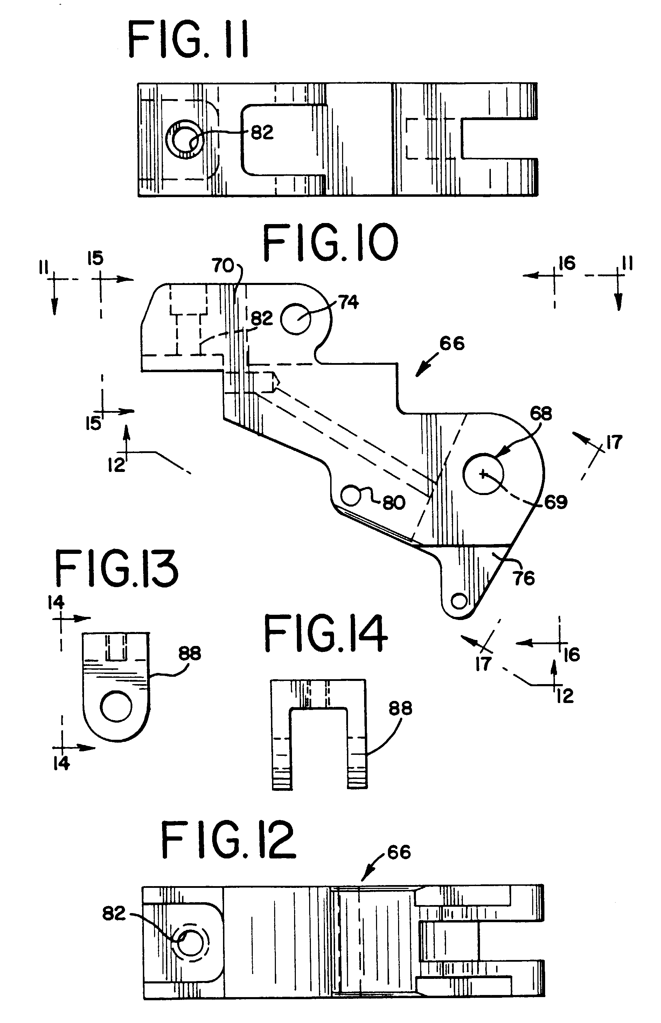

Figure 10 is a top plan view of the pawl of the lock

Figure 11 is a side elevational view of the pawl taken along lines 11-11 of Figure 10.

Figure 12 is a side elevational view of the pawl taken along lines 12-12 of Figure 10.

Figure 13 shows the load cell adapter of the pawl.

Figure 14 is a side view of the load cell adapter taken along lines 14-14 of Figure 13.

Figure 15 is a partial side elevational view of the pawl taken along lines 15-15 of Figure 10.

Figure 16 is a side elevational view of the pawl taken along lines 16-16 of Figure 10.

Figure 17 is a side elevational view of the pawl taken along lines 17-17 of Figure 10.

Figure 18 shows an alternate embodiment of the pawl.

Figure 19 is a side elevational view of the locking arm of the lock.

Figure 20 is a side elevational view of the locking arm taken along lines 20-20 of Figure 19.

Figure 21 is a side elevational view of the slide member of the lock.

Figure 22 is a side elevational view of the slide member taken along lines 22-22 of Figure 21.

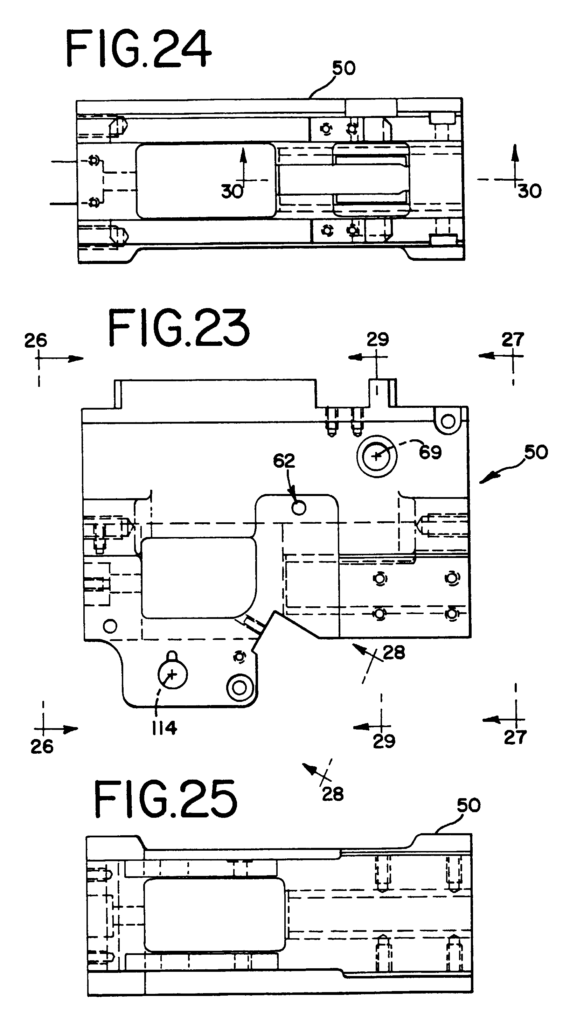

Figure 23 is a top plan view of the housing of the lock.

Figure 24 is an interior side elevational view of the housing.

Figure 25 is an exterior side elevational view of the housing.

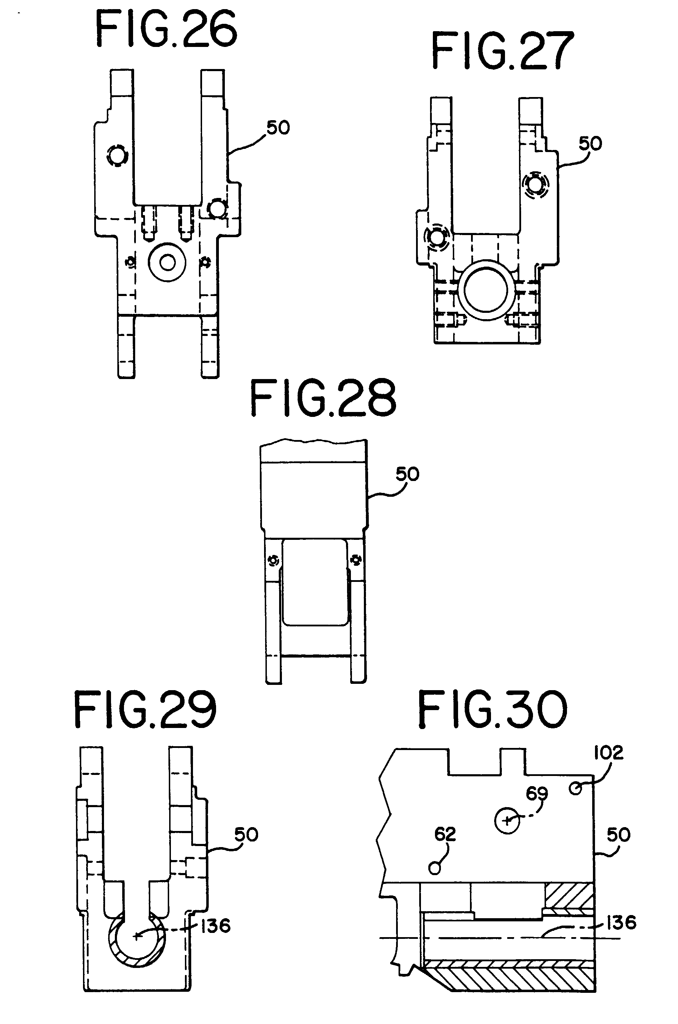

Figure 26 is a left end view of the housing taken along lines 26-26 of Figure 23.

Figure 27 is a right end view of the housing taken along lines 27-27 of Figure 23.

Figure 28 is a partial side elevational view of the housing taken along lines 28-28 of Figure 23.

Figure 29 is a cross-sectional view taken along lines 29-29 of Figure 23.

Figure 30 is a cross-sectional view taken along lines 30-30 of Figure 24.

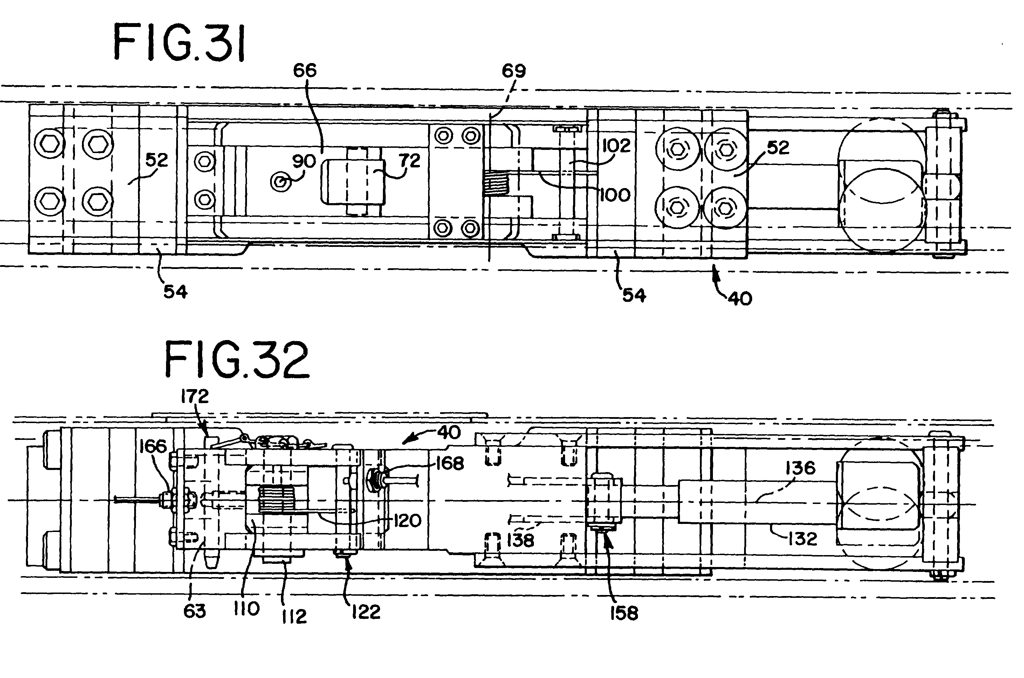

Figure 31 is an interior side elevational view of the lock taken along lines 31-31 of Figure 1.

Figure 32 is an exterior side elevational view of the lock taken along lines 32-32 of Figure 2.

### Detailed Description of the Preferred Embodiment

The pallet lock 40 of the present invention is adapted to be attached to the left and/or right side pallet restraint rail 42 of an aircraft to selectively engage and disengage a cargo pallet 44, such that when the pallet lock 40 engages the cargo pallet 44, the cargo pallet 44 is restrained from longitudinal movement in both the forward and aft directions.

The pallet lock 40 includes a housing 50 preferably constructed of cast aluminum. The housing 50 is attached at opposing ends thereof to a side restraint rail 42 of an aircraft by generally L-shaped mounting brackets 52. One leg of each mounting bracket 52 is secured to the rail 42 by suitable fasteners. An elastomeric pad 54 formed from resilient material such as urethane is located between each mounting bracket 52 and the housing 50. An elastomeric pad 56 is located on the opposite side of each mounting bracket 52 from the elastomeric pad 54. A backing plate 58 is located on the exterior of each elastomeric pad 56. A pair of shoulder bolts 60 slidably extend through each backing plate 58, elastomeric pad 56, mounting bracket 52 and elastomeric pad 54, and are threadably attached to the housing 50. The elastomeric pads 54 and 56 provide the pallet lock 40 with a certain amount of fore and aft movement or float when resisting parachute loads. This movement allows each lock 40 which is engaging the same cargo pallet 44 to move slightly in the longitudinal direction to distribute the parachute forces applied to the pallet 44 substantially uniformly between all of the locks 40 which are engaging the pallet 44. The housing 50 includes a manual locking aperture 62 and a storage aperture 63.

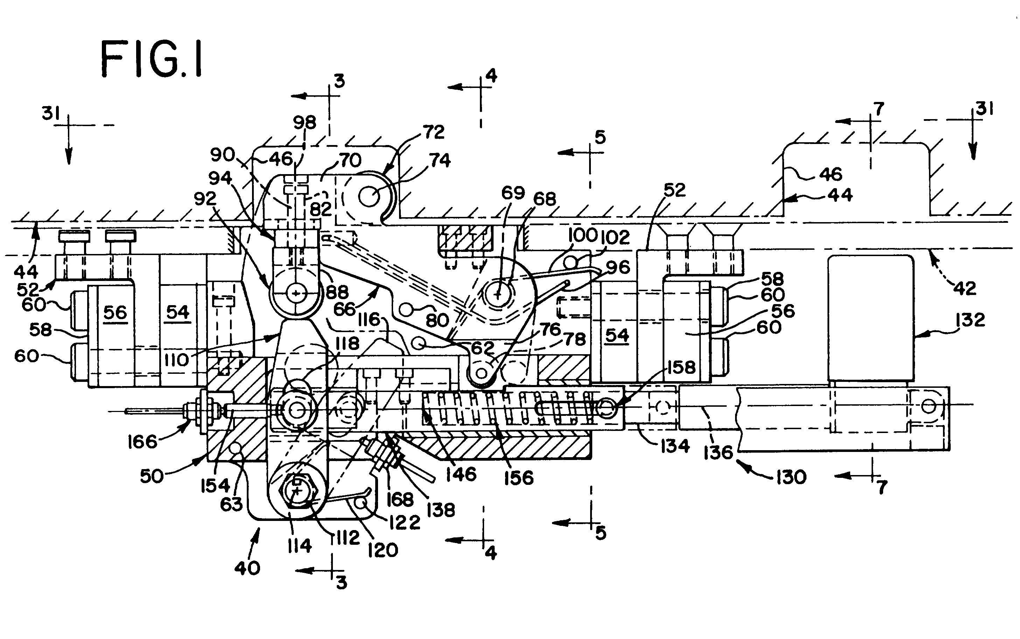

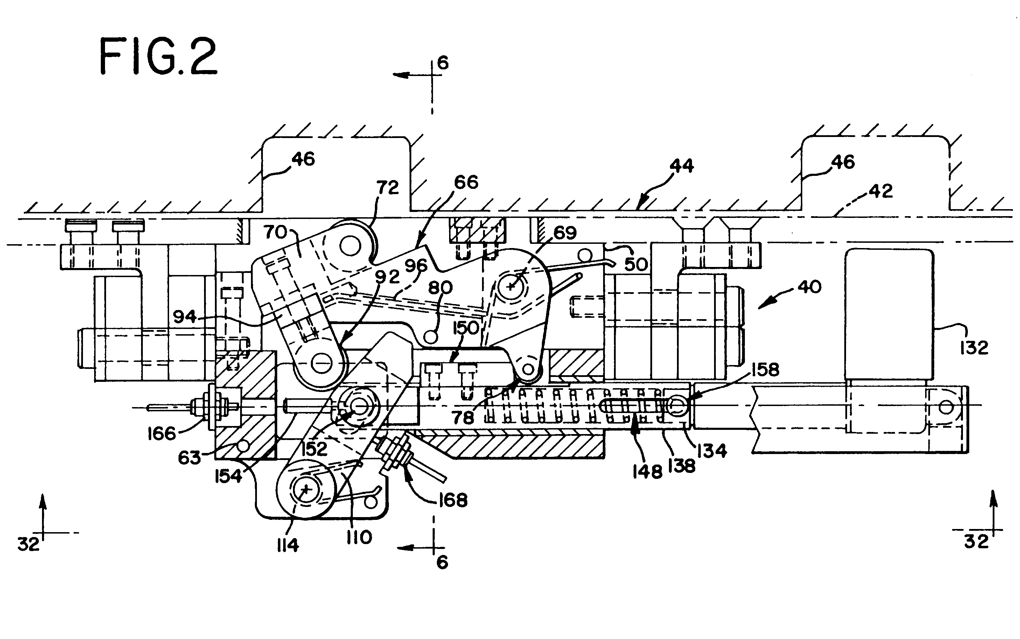

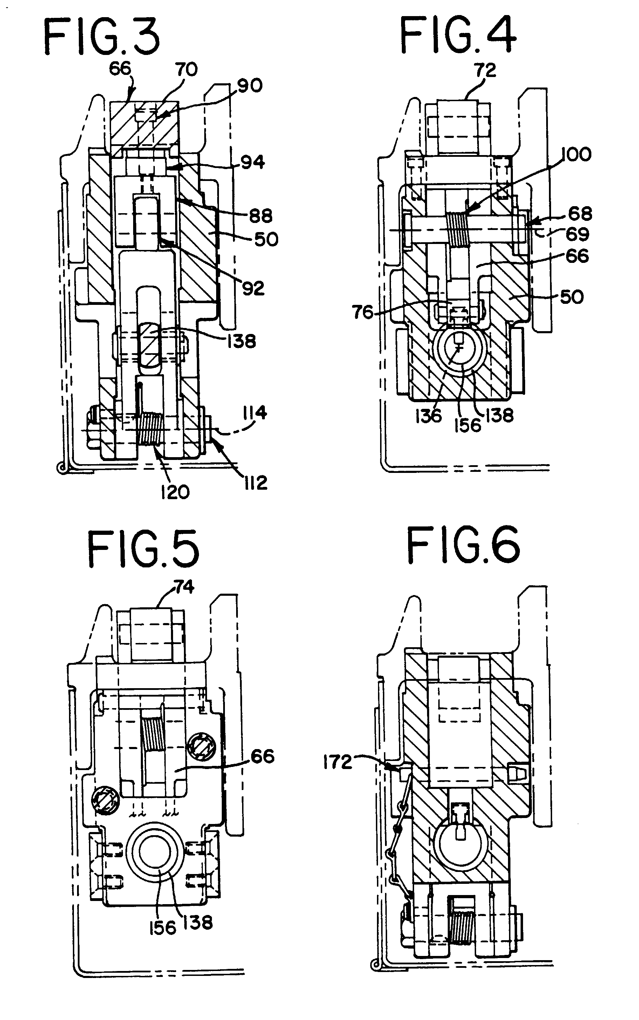

The pallet lock 40 includes a lock pawl 66 which is pivotally attached to the housing 50 by a pivot pin 68 for pivotal movement about an axis 69. The pawl 66 includes a head portion 70 having a pawl roller 72 rotatably attached thereto by a shaft 74. The pawl roller 72 is located at the forward end of the head portion 70. As best shown in Figure 1, the head portion 70 and pawl roller 72 are adapted to fit within a recess 46 formed in the cargo pallet 44 when the pawl 66 is pivoted to the extended or locked position. The lock pawl 66 also includes a foot portion 76 having a slide roller 78 rotatably mounted thereon. The pawl 66 also includes a manual locking aperture 80. The locking aperture 80 is adapted to align with the locking aperture 62 in the housing 50 when the pawl 66 is pivoted to the unlocked or retracted position as shown in Figure 2.

The head portion 70 of the lock pawl 66 also includes a bore 82 extending therethrough A load cell adapter 88 is attached to the head portion 70 of the lock pawl 66 by a fastener 90 such as a shoulder bolt which extends through the bore 82. A load cell roller 92 is rotatably attached to the end of the load cell adapter 88. The load cell roller 92, pawl roller 72 and slide roller 78 are all rotatable about respective axes which are each generally parallel to one another. A load cell 94 is located between the head portion 70 and the load cell adapter 88 of the lock pawl 66. A preferred load cell is a washer-shaped strain gage Model No. LW-7 as manufactured by Transducer Techniques. The fastener 90 extends through the center of the load cell 94 to secure the load cell 94 to the lock pawl 66. A cable 96 having a plurality of wires extends from the load cell 94 to a control panel (not shown). The fastener 90 allows relative longitudinal movement along an axis 98 between the load cell adapter 88 and the head portion 70 of the lock pawl 66 such that forces transmitted by the head portion 70 to the load cell adapter 88 are monitored and measured by the interposed load cell 94. The load cell 94 transmits a signal through the cable 96 representative of the magnitude of the measured force to the control panel.

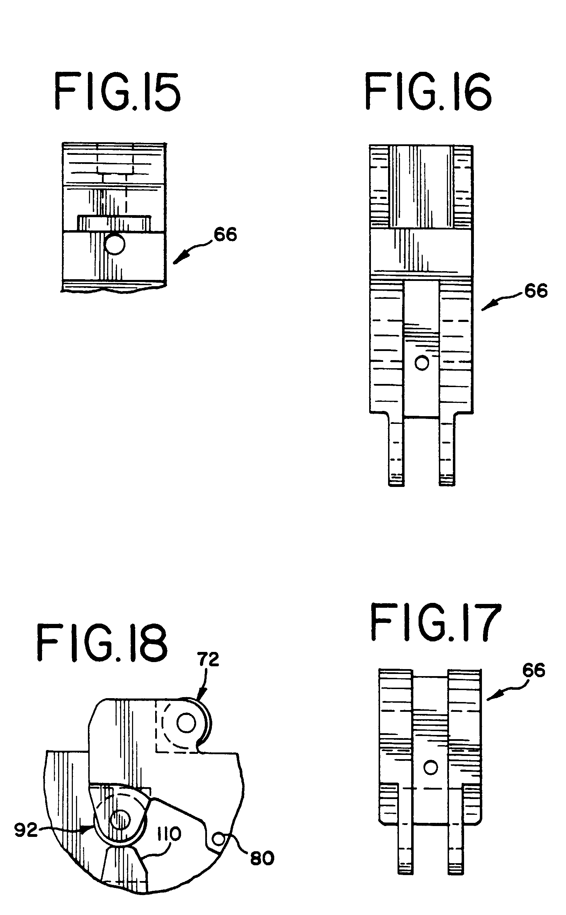

A torsion spring 100 extends around the pivot pin 68 and has a first end thereof engaging the pawl 66 and a second end engaging a pin 102 attached to the housing 50. The torsion spring 100 resiliently biases the pawl 66 to pivot about the axis 69 from the retracted or unlocked position to the extended or locked position. An alternative embodiment of the lock pawl 66 is shown in Figure 18 wherein the load cell 94 is eliminated and the roller 92 is directly attached to the head portion of the lock pawl.

The pallet lock 40 also includes a locking arm 110 which is pivotally attached at the bottom end portion thereof to the housing 50 by a fastener 112. The locking arm 110 is selectively pivotal about an axis 114 between an extended or locked position, as shown in solid lines in Figure 1, and a retracted or unlocked position as shown in dashed lines in Figure 1 and in solid lines in Figure 2. The top end of the locking arm 110 includes a top surface 116 which is concavely curved at the same radius as the load cell roller 92. In another form the concavity can be eliminated. The load cell roller 92 thereby has an increased area of surface contact with the top surface 116 of the locking arm 110 which reduces compressive stress loading at the area of engagement between the load cell roller 92 and the top surface 116 of the locking arm 110. The locking arm 110 also includes a pair of opposing slots 118 extending therethrough which are elongated in the longitudinal direction of the locking arm 110.

A torsion spring 120 extends around the fastener 112 and has a first end in engagement with the locking arm 110 and a second end in engagement with a pin 122 attached to the housing 50. The torsion spring 120 resiliently biases the locking arm 110 to pivot about the axis 114 from the retracted position to the extended position. When the locking arm 110 is pivoted to the extended or locked position, the locking arm 110 locks the pawl 66 in the extended or locked position in restraining engagement with the pallet 44. When the locking arm 110 is pivoted to the retracted or unlocked position, the locking arm 110 is disengaged from the pawl 66 such that the pawl 66 is free to pivot from the locked position to the unlocked position, thereby releasing the cargo pallet 44 for longitudinal movement.

The pallet lock 40 also includes an actuator mechanism 130 attached to the housing 50 for selectively pivoting the locking arm 110 between the extended and retracted positions, and for pivoting the pawl 66 from the extended to retracted position. The actuator mechanism 130 includes an electrically operated linear actuator 132. A preferred actuator 132 is the Model 85615 ball drive actuator as manufactured by Motion Systems which operates on 28 volts DC. The actuator 132 includes a linearly extendable and retractable ram 134. The ram 134 is moveable along a longitudinal axis 136.

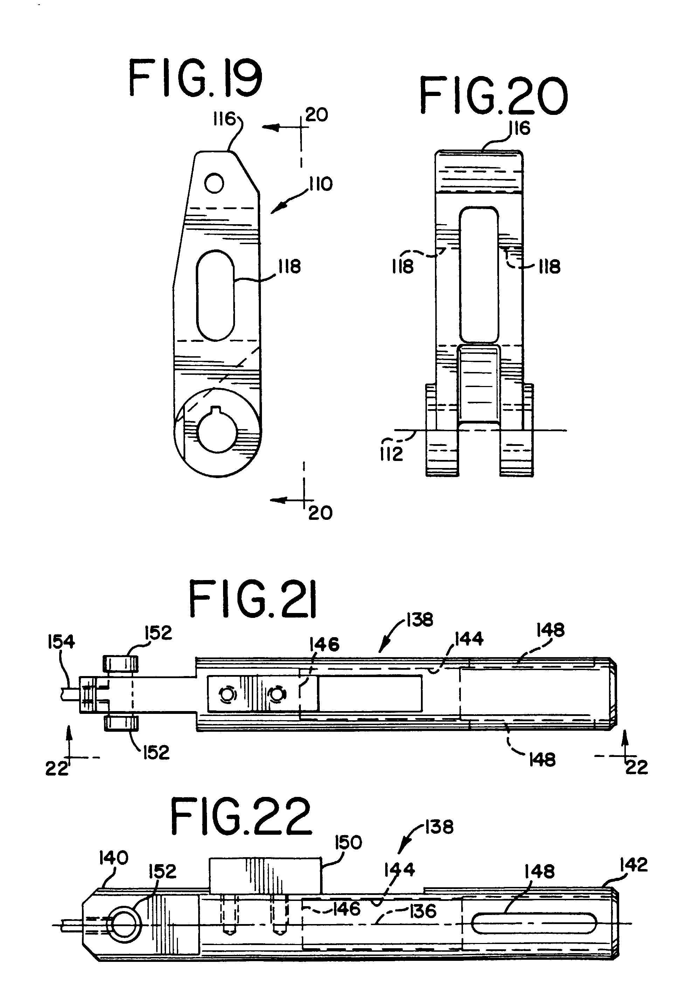

A slide member 138 is slidably attached to the housing 50. As best shown in Figures 21 and 22, the slide 138 includes a first end 140 and a second end 142. A bore 144 extends longitudinally within the slide 138 from the second end 142 and forms an internal wall 146 at the end of the bore. A longitudinal slot 148 is located in the side wall of the slide 138 on each side of the bore 144 at the second end 142. A slide dog 150 is attached to the slide member 138 between the first end 140 and second end 142. A pair of rollers 152 are rotatably mounted to the first end 140 on respective sides of the slide member 138. The rollers 152 are adapted to fit within a respective slot 118 of the locking arm 110 and to be slidably and rotatably movable therein.

As best shown in Figures 1 and 2, a pin 154 extends longitudinally from the first end 140 of the slide member 138. As also best shown in Figures 1 and 2, a compression spring 156 is located within the bore 144 of the slide member 138. A cross pin 158 extends through the slots 148 at the second end 142 of the slide member 138 and is slidable longitudinally along the length of the slots 148. The cross pin 158 also extends through and is connected to the ram 134 of the actuator 132. As shown in Figures 1 and 2, the compression spring 156 biases the cross pin 158 to the right end of the slots 148. The length of the slots 148 is preferably equal to or larger than the length of travel of the ram 134. The linear actuator 132 is electrically connected to and controlled by a control panel.

The housing 50 includes a locked position switch 166 and an unlocked position switch 168. Various different types of position switches may be used as are well known in the art. The locked position switch 166 is activated by the pin 154 of the slide member 138 when the locking arm 110 is pivoted to the extended position. The unlocked position switch 168 is activated by the locking arm 110 when the locking arm is in the unlocked position. The position switches 166 and 168 are electrically connected to a control panel to indicate the position of the locking arm 110.

In operation, once a pallet 44 is properly positioned in an aircraft, one or more pallet locks 40 on each side of the pallet 44 may be actuated to engage and restrain the pallet 44 from longitudinal movement in the aft or fore direction. A pallet lock 40 is moved to the locked position, as shown in Figure 1, by the actuator 132 of the actuator mechanism 130. The actuator 132 of the actuator mechanism 130 extends the ram 134 along the axis 136 in response to an electrical signal from a control panel. The end of the ram 134 presses against the compression spring 156 which in turn presses against the wall 146 of the slide member 138. Thus as the ram 134 moves to its fully extended position, the slide member 138 correspondingly slides along the axis 136 with respect to the housing 50. As the slide member 138 slides to its extended position, the rollers 152 of the slide member 138 rollingly engage the slots 118 in the locking arm 110 and cause the locking arm to pivot about the axis 114 from its retracted position to its extended and locked position. As the slide member 138 slides to its fully extended position, the pin 154 of the slide member 138 extends through a bore in the housing 50 to actuate the locked position switch 166 to thereby indicate that the locking arm 110 is in the locked position.

In addition, as the slide member 138 slides to its fully extended position, the slide dog 150 slides away from the slide roller 78 of the lock pawl 66 thereby allowing the torsion spring 100, and the locking arm 110 through its engagement with the load cell roller 92, to pivot the locking pawl 66 from its retracted position to its extended and locked position wherein the head portion 70 and pawl roller 72 extend into the recess 46 of the cargo pallet 44. When the pallet lock 40 is in the locked position, the rotational axis of the load cell roller 92, the rotational axis of the rollers 152 of the slide member 138, and the pivot axis 114 of the locking arm 110 are all aligned along the axis 98.

When a force in the aft direction is applied to the pawl roller 72 by a pallet 44, such as the load from a deployed parachute attached to the pallet 44, the aft force is transmitted from the pawl roller 72, through the head portion 70, and to the load cell roller 92 through the load cell 94. The roller 92 ensures that the force always coincides with the central line of the load cell. The load cell 94 monitors the magnitude of this force and transmits a corresponding signal to the control paneL The aft force is further transmitted from the load cell roller 92 along the axis 98 to the top surface 116 of the locking arm 110, to the fastener 112, and then to the housing 50. The load cell roller 92 causes a column load on the locking arm 110 such that the locking arm 110 remains in a mechanically locked position. The lock 40 will preferably resist a five thousand pound parachute load plus a factor of safety.

When a pallet 44 is not properly aligned with the pallet lock 40, the lock pawl 66 may not be able to extend into the recess 46 of the pallet 44. In such a case when the lock pawl 66 cannot pivot to the extended position, the locking arm 110 is also prevented from pivoting from its retracted position to its extended position. Thus, when the ram 134 of the actuator 132 is being extended, but the locking arm 110 and lock pawl 66 are prevented from pivoting to their extended positions, the ram 134 will slide within the cavity of the slide member 138 while compressing the compression spring 156. The slots 148 thereby allow the ram 134 to be fully extended while the slide member 138 remains in its retracted position thereby reducing the chances of damaging the lock 40 by trying to extend the lock pawl to the locked position when the lock pawl 66 is prevented from pivoting to the locked position.

When it is desired to release the lock pawl 66 from the pallet 44, the ram 134 of the actuator 132 is retracted. The cross pin 158 attached to the ram 134 pulls the slide member 138 to its retracted position, and the rollers 152 of the slide member 138 pivot the locking arm 110 to its retracted position. As the slide member 138 slides to its retracted position, the slide dog 150 engages the slide roller 78 of the lock pawl 66 and causes the lock pawl 66 to pivot about the axis 69 from its locked position to its unlocked position. The slide dog 150 maintains the lock pawl 66 in the unlocked position when the ram 134 of the actuator 132 is retracted. A locking pin 172, as best shown in Figure 6, may be manually inserted through the locking aperture 62 of the housing 50 and locking aperture 80 of the lock pawl 66 to manually lock the lock pawl 66 in the retracted or unlocked position to prevent inadvertent actuation of the pallet lock 40 to the locked position. One or more pallet locks 40 may be electrically connected to a single control panel for simultaneous programmable operation.

## Claims

1. A pallet lock for selectively restraining movement of a cargo pallet, said pallet lock comprising:
a housing;
a pawl pivotally attached to said housing, said pawl adapted to pivot between a first position wherein said pawl is adapted to engage the cargo pallet and restrain movement of the cargo pallet and a second position wherein said pawl is adapted to allow unrestrained movement of the cargo pallet;
pivot means for selectively pivoting said pawl from said first position to said second position; and
force measuring means coupled to said pawl for measuring the magnitude of the force the cargo pallet is applying to said pawl when said pawl is in said first position;
whereby said pivot means is adapted to pivot said pawl from said first position to said second position to release the cargo pallet when said force measuring means detects that a predetermined magnitude of force is being applied to said pawl by the cargo pallet.

2. The pallet lock of claim 1 wherein said force measuring means comprises a load cell.

3. The pallet lock of claim 2 wherein said load cell comprises a strain gage.

4. The pallet lock of claim 1 including locking means for selectively locking said pawl in said first position.

5. The pallet lock of claim 4 wherein said locking means comprises a locking arm, said locking arm being pivotally attached to said housing, said locking arm being selectively pivotal between a locked position wherein said locking arm prevents said pawl from pivoting from said first position to said second position and an unlocked position wherein said locking arm allows said pawl to pivot from said first position to said second position.

6. The pallet lock of claim 5 wherein said force measuring means is located between said pawl and said locking arm when said pawl is in said first position and said locking arm is in said locked position.

7. The pallet lock of claim 4 wherein said pivot means comprises a longitudinally movable slide member adapted to pivot said locking arm from said locked position to said unlocked position and to pivot said pawl from said first position to said second position.

8. The pallet lock of claim 7 wherein said pivot means additionally comprises an electrically operated linear actuator mechanism attached to said slide member for selectively moving said slide member.

9. A pallet lock for selectively restraining movement of a cargo pallet, said pallet lock comprising:
a housing;
a pawl pivotally attached to said housing, said pawl adapted to pivot between a first position wherein said pawl is adapted to engage the cargo pallet and restrain movement of the cargo pallet and a second position wherein said pawl is adapted to allow unrestrained movement of the cargo pallet;
a locking arm pivotally attached to said housing, said locking arm being selectively pivotal between a locked position wherein said locking arm is adapted to engage said pawl to prevent said pawl from pivoting from said first position to said second position and an unlocked position wherein said locking arm allows said pawl to pivot from said first position to said second position; and
an actuator mechanism adapted to pivot said locking arm from said locked position to said unlocked position and to pivot said pawl from said first position to said second position to thereby release the cargo pallet from said pallet lock.

10. The pallet lock of claim 9 wherein said pawl includes a head portion adapted to engage the cargo pallet and a foot portion adapted to be engaged by said actuator mechanism.

11. The pallet lock of claim 10 wherein said actuator mechanism includes a slide member adapted to slide longitudinally between a third position and a fourth position, said slide member being coupled to said locking arm.

12. The pallet lock of claim 11 wherein said actuator member includes an engagement member attached to said slide member, said engagement member adapted to engage said foot of said pawl and to pivot said pawl from said first position to said second position when said slide member is moved from said third position to said fourth position.

13. The pallet lock of claim 12 wherein said actuator member includes an electrically operated linear actuator attached to said slide member, said linear actuator adapted to provide selective movement of said slide member.

14. The pallet lock of claim 12 including means for resiliently biasing said slide member towards said fourth position.

15. The pallet lock of claim 9 including a load cell coupled to said pawl, said load cell adapted to measure the magnitude of the force the cargo pallet is applying to said pawl when said pawl is in said first position.

16. The pallet lock of claim 15 including an adapter member coupled to said pawl, said load cell being located between said pawl and said adapter member, said adapter member being relatively movable with respect to said pawl along a longitudinal axis.

17. The pallet lock of claim 16 wherein said locking arm engages said adapter member when said locking arm is in said locked position and said pawl is in said first position to prevent movement of said pawl from said first position to said second position.

18. The pallet lock of claim 17 wherein said longitudinal axis of movement of said adapter member substantially intersects a pivot axis of said locking arm when said pawl is in said first position and said locking arm is in said locked position.
